Europäisches Patentamt

European Patent Office

Office européen des brevets

(19)

(11) Numéro de publication: **0 041 020**
**B1**

(12) **FASCICULE DE BREVET EUROPEEN**

(45) Date de publication du fascicule du brevet:
14.03.84

(51) Int. Cl.³: **B 60 T 8/18**, B 60 T 13/14

(21) Numéro de dépôt: **81400809.0**

(22) Date de dépôt: **21.05.81**

(54) **Dispositif de dosage pour une installation de freinage pour véhicule.**

(30) Priorité: **22.05.80 FR 8011453**

(43) Date de publication de la demande:
**02.12.81 Bulletin 81/48**

(45) Mention de la délivrance du brevet:
**14.03.84 Bulletin 84/11**

(84) Etats contractants désignés:
**DE GB IT**

(56) Documents cités:
**DE - A - 2 820 107**
**DE - A - 2 820 142**
**FR - A - 1 293 001**
**FR - A - 1 471 185**
**FR - A - 2 329 487**
**FR - A - 2 393 706**

(73) Titulaire: **SOCIETE ANONYME AUTOMOBILES
CITROEN, 117 à 167, Quai André Citroen, F-75747 Paris
Cedex 15 (FR)**
Titulaire: **AUTOMOBILES PEUGEOT, 75, avenue de la
Grande Armée, F-75116 Paris (FR)**

(72) Inventeur: **Constans, Alain, 47, rue du Général Weivert,
F-78150 Le Chesnay (FR)**
Inventeur: **Richard, Denis, 10, rue Henri Corvol,
F-94600 Choisy-le-Roi (FR)**

(74) Mandataire: **Michardière, Bernard et al, Cabinet
Plasseraud 84, rue d'Amsterdam, F-75009 Paris (FR)**

BUNDESDRUCKEREI BERLIN

**0 041 020**

## Dispositif de dosage pour une installation de freinage pour véhicule

L'invention est relative à un dispositif de dosage pour une installation de freinage pour véhicule du genre de celles qui comprennent deux circuits indépendants et deux tiroirs coulissants de commande permettant l'alimentation en fluide sous pression de chaque circuit, un premier tiroir étant sensible à un dispositif actionné par le conducteur, ce premier tiroir contrôlant la pression de fluide admis dans un premier circuit à partir d'une première source de fluide sous pression, notamment un accumulateur hydraulique, le second tiroir étant soumis à une extrémité à la pression du fluide du premier circuit, et, à son autre extrémité, à la pression du fluide du second circuit, ce second tiroir étant propre à contrôler la pression de fluide admis dans le deuxième circuit à partir d'une deuxième source de fluide sous pression notamment un accumulateur de suspension. Une telle installation est décrite dans le brevet FR-A-1 293 001. On connait, notamment par FR-A-2 329 487, un dispositif de dosage pour une installation de freinage, dans lequel des moyens de compensation sensibles à la charge du véhicule permettent d'assurer une modulation de la pression dans le deuxième circuit, qui se trouve être le circuit de freinage avant.

Cependant, le taux de variation de la pression dans le deuxième circuit, introduit par cette modulation de pression, ne subit pas de variation pour une valeur déterminée de la pression, qui peut dépendre de la charge du véhicule. Ainsi, même pour des charges réduites, le taux de variation de la pression dans le deuxième circuit peut être inférieur à celui de la pression du premier circuit, alors même qu'une telle diminution n'est pas justifiée par le conditions de roulage; il peut en résulter une diminution des performances de freinage du véhicule.

L'invention a pour but, surtout, de rendre le dispositif de dosage pour installation de freinage du genre défini initialement, tel qu'il permette des performances de freinage améliorées avec un minimum de pièces supplémentaires.

Selon l'invention, un dispositif de dosage pour une installation de freinage du genre défini précédemment, est caractérisé par le fait que le second tiroir est combiné avec des moyens de compensation sensibles à la charge du véhicule propres à exercer une force axiale sur ce second tiroir dans le même sens que la force exercée par la pression du fluide du second circuit sur ce second tiroir à partir d'une valeur limite de la pression dans le second circuit, et que le dispositif comporte des moyens propres à modifier la valeur limite de la pression en fonction de la charge l'ensemble permettant d'assurer une modulation de la pression du fluide dans le deuxième circuit selon un taux de variation inférieur à celui de la pression du premier circuit, lorsque la pression dans le premier circuit a atteint la susdite valeur limite dépendant de la charge du véhicule.

De préférence, les moyens de compensation et les moyens pour modifier la valeur limite de la pression en fonction de la charge comprennent une bague montée coulissante dans un alésage, bague dans laquelle le second tiroir est monté coulissant à son extrémité opposée à celle soumise à la pression du fluide du premier circuit, cette bague étant soumise sur une face à la pression du fluide du second circuit et à l'action d'un ressort, cette face étant éloignée de l'extrémité du second tiroir soumise à la pression du premier circuit, tandis que l'autre face de la bague est soumise à une force dépendant de la charge du véhicule.

Avantageusement, lorsque la deuxième source de fluide sous pression est formée par un accumulateur de suspension, la susdite face de la bague tournée vers le premier tiroir est soumise à la pression du fluide de cet accumulateur de suspension, cette pression dépendant de la charge du véhicule.

Dans un véhicule automobile, le second circuit est généralement constitué par un circuit de freinage arrière et la deuxième source de fluide sous pression est formée par un accumulateur de suspension arrière.

L'invention sera mieux comprise à l'aide de la description qui suit relative à un mode de réalisation particulier, nullement limitatif, avec référence aux dessins ci-annexés.

La figure 1, de ces dessins, est une représentation schématique simplifiée d'une installation de commande de freinage à deux circuits indépendants, conforme à l'invention.

La figure 2, est une coupe suivant II-II, figure 4 du dispositif de dosage de l'installation de la figure 1, représenté à plus grande échelle.

La figure 3 est une coupe suivant III-III, figure 4.

La figure 4 est une vue de dessous par rapport à la figure 3.

La figure 5 est une coupe axiale partielle d'une variante de réalisation.

La figure 6, enfin, est un diagramme illustrant le fonctionnement d'une installation de freinage selon l'invention.

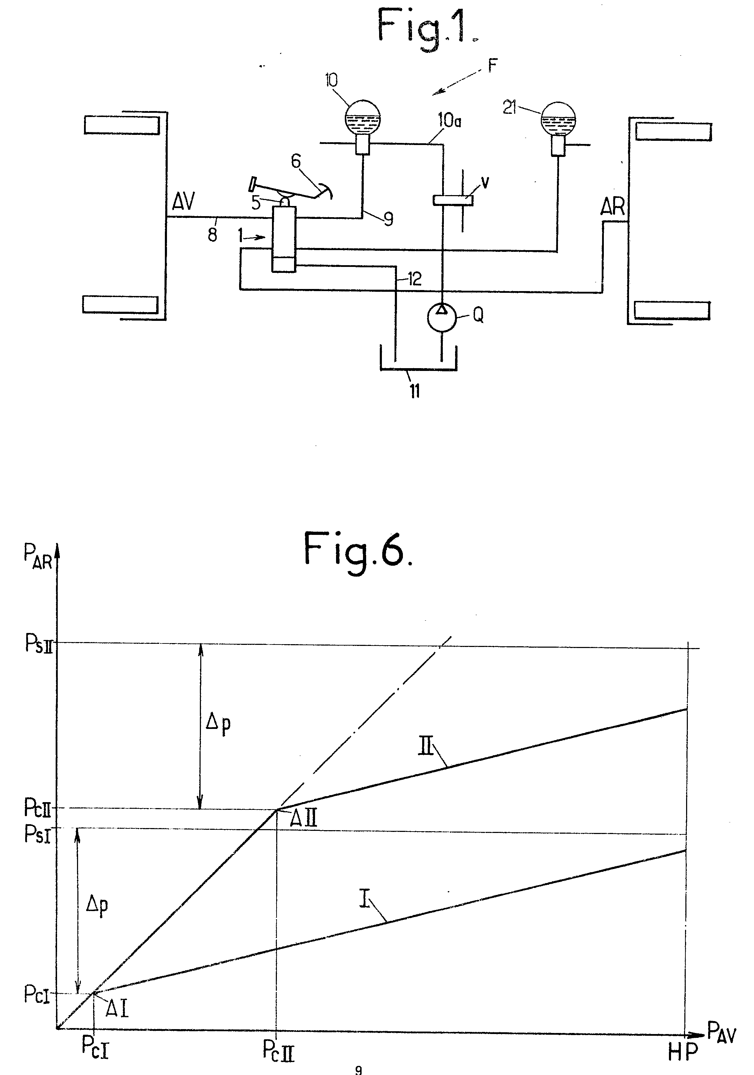

En se reportant aux dessins, notamment aux figures 1 à 3, on peut voir une installation de commande de freinage F pour véhicule automobile comprenant deux circuits indépendants, respectivement le circuit AV de freinage pour les roues avant et le circuit AR de freinage pour les roues arrière.

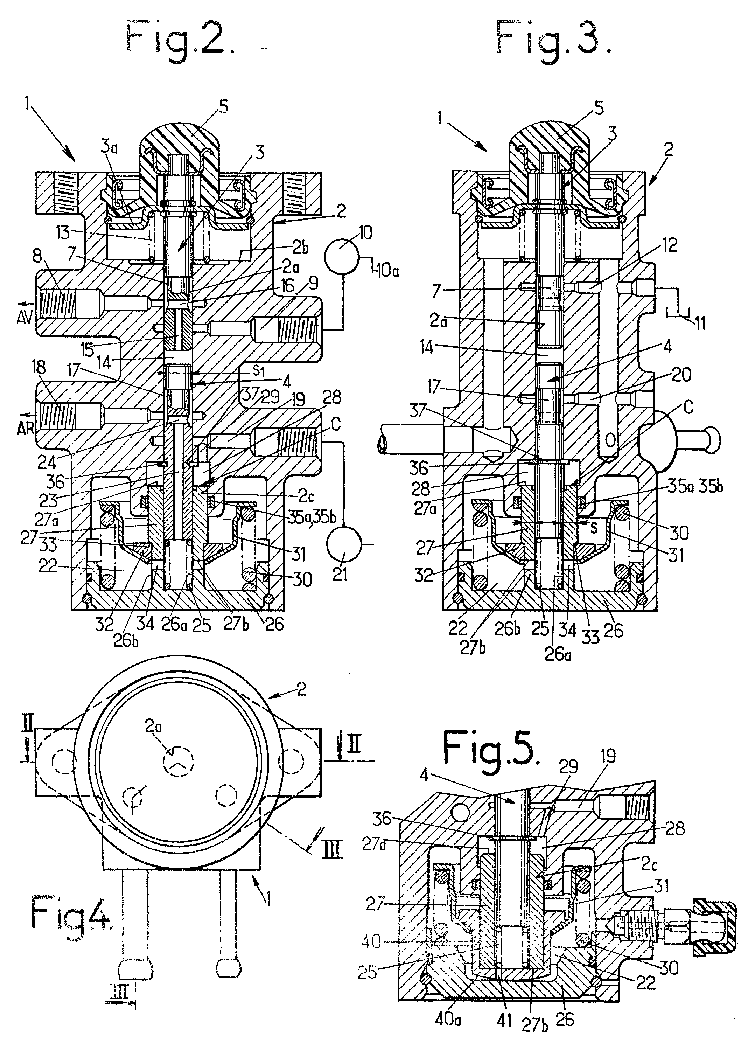

L'installation comporte un ensemble ou dispositif de dosage 1, constitué, comme visible sur les figures 2 et 3, par un corps 2 présentant un alésage 2a dans lequel peuvent coulisser deux tiroirs 3 et 4 disposés coaxialement. Ces tiroirs 3 et 4 forment deux éléments de commande permettant l'alimentation en fluide sous pression respectivement des circuits AV et AR.

2

Le tiroir 3, ou premier élément de commande, pour le premier circuit AV est sensible à un dispositif 5 notamment formé par un tampon en matière élastomère propre à être déplacé par une pédale 6 (fig. 1) actionnée par le conducteur. Le tampon 5 est emmanché sur l'extrémité externe du tiroir 3.

Ce tiroir 3 est muni d'une gorge annulaire 7 disposée en regard d'un conduit d'utilisation 8 relié au circuit AV. Cette gorge 7 est propre à mettre en communication, selon la position du tiroir 3 le long de son axe, le conduit d'utilisation 8 soit avec un conduit d'alimentation 9 relié à une source de fluide sous pression tel que l'accumulateur hydraulique 10 principal de l'installation hydraulique du véhicule, soit avec un réservoir de fluide 11 à pression relative nulle ou sensiblement nulle, par un conduit d'échappement 12 (fig. 3).

Le tiroir 3 est normalement maintenu en position de fermeture du conduit d'alimentation 9 et d'ouverture du conduit d'échappement 12 par un ressort 13 (fig. 2) disposé entre le fond 2b d'un évidement du corps 2 et une coupelle 3a bloquée axialement sur le tiroir 3. Cette position est représentée sur les figures 2 et 3.

L'accumulateur hydraulique 10 est monté sur la canalisation de refoulement 10a d'une pompe Q (fig. 1) dont l'aspiration est branchée sur le réservoir 11. Une vanne de sécurité v est généralement montée sur cete canalisation 10a. Il est clair que la représentation de l'installation de freinage sur la figure 1 a été simplifiée et réduite à la partie essentiellement concernée par l'invention. Pour avoir des compléments sur une telle installation, il suffit de se reporter au brevet FR. N° 1 293 001.

L'extrémité du tiroir 3 opposée a tampon 5, ou extrémité interne, est soumise à la pression de fluide dans le premier circuit AV, cette pression règnant dans la chambre 14 comprise entre les deux tiroirs 3 et 4 (fig. 2 et 3). Cette chambre 14 est reliée au conduit d'utilisation 8 par un perçage axial 15 du tiroir 3 et un perçage radial 16 débouchant dans la gorge annulaire 7.

Le tiroir 4, ou second élément de commande, est sensible à la pression de fluide dans le premier circuit AV, puisque la face du tiroir 4 limitant la chambre 14 est soumise à la pression règnant dans cette chambre, c'est-à-dire à la pression du circuit AV. Ce tiroir 4 est, en outre, le cas échéant, sensible au déplacement du tiroir 3; en effet, si pour une raison quelconque la pression dans le circuit AV et dans la chambre 14 vient à chuter, le tiroir 3 en se déplaçant va venir en butée contre le tiroir 4; le tiroir 4 sera donc déplacé mécaniquement par le tiroir 3.

Ce tiroir 4 est muni d'une gorge annulaire 17 disposée en regard d'un conduit d'utilisation 18 relié au deuxième circuit de freinage AR. Cette gorge 17 est propre à mettre en communication, selon la position axiale du tiroir 4, le conduit d'utilisation 18 soit avec un conduit d'alimentation 19 (fig. 2) soit avec le réservoir 11 par un conduit d'échappement 20 (fig. 3). Le conduit d'alimentation 19 est relié à une deuxième source de fluide sous pression formé par un accumulateur de suspension arrière 21 (fig. 1 et 2).

Le tiroir 4 est soumis, à son extrémité éloignée du tiroir 3, à la pression du fluide dans le deuxième circuit AR; cette pression règne dans une chambre 22 entourant l'extrémité du tiroir 4, ladite chambre 22 étant reliée au conduit d'utilisation 18 par un perçage axial 23 du tiroir 4 et un perçage radial 24 débouchant dans la gorge annulaire 17.

Le tiroir 4 est en outre soumis, à son extrémité éloignée du tiroir 3, à l'effort d'un ressort 25 qui maintient normalement le tiroir 4 en position de fermeture du conduit d'alimentation 19, et de mise en communication du conduit d'échappement 20 avec le conduit d'utilisation 18 (fig. 2 et 3). Le ressort 25 est disposé dans un trou borgne 26a d'un couvercle 26 qui assure la fermeture de la chambre 22 prévue à une extrémité du corps 2.

Le second élément de commande ou tiroir 4 est combiné avec des moyens C sensibles à la charge du véhicule de manière à assurer une modulation de la pression $P_{AR}$ du fluide dans le deuxième circuit AR selon un taux de variation inférieur à celui de la pression du premier circuit $P_{AV}$, lorsque la pression $P_{AV}$ dans le premier circuit a atteint une valeur qui dépend de la charge du véhicule.

Les moyens C sensibles à la charge sont propres à exercer une force axiale, sur le second tiroir 4, à partir d'une valeur de la pression $P_{AR}$ (dans le second circuit) qui dépend de la charge.

Les moyens C comprennent une bague 27 (fig. 2 et 3) dans laquelle l'extrémité du tiroir 4 opposée au tiroir 3, est montée coulissante. Cette bague 27 est elle-même montée coulissante dans un alésage 2c du corps 2. La bague 27 est normalement maintenue en appui contre un épaulement 26b du couvercle 26 par la pression de fluide $P_s$ de la deuxième source 21 qui s'exerce sur la face 27a de la bague 27 tournée vers le premier tiroir 3. La pression $P_s$ de la deuxième source 21 est admise, à partir du conduit d'alimentation 19, dans la chambre 28 par un conduit 29, la face 27a limitant cette chambre 28.

La bague 27 est soumise, sur sa face 27b éloignée du premier tiroir 3, à la pression $P_{AR}$ du fluide dans le second circuit AR, puisque cette face 27b se trouve dans la chambre 22 où règne la pression $P_{AR}$. La bague 27 est en outre soumise, à cette extrémité, à l'action d'un ressort 30 disposé entre le couvercle 26 de fermeture et une coupelle 31 qui repose sur un anneau 32 prenant appui contre un épaulement 33 de la bague 27.

L'extrémité de la bague 27, tournée vers le couvercle 26, présente des canaux, ou rainures 34, orientés radialement qui permettent le maintien d'une communication entre la chambre 22 et le volume intérieur de la bague, lorsque l'extrémité de la bague est en appui contre l'épaulement 26b; le fluide sous pression passant par le perçage axial 23 peut donc aller dans la chambre 22.

Deux segments d'étanchéité 35a, 35b sont prévus dans une gorge de l'alésage 2c et entourent la bague 27; ces deux segments coupent toute communication, à la surface extérieure de la bague 27, entre la chambre 28 et la chambre 22.

Le déplacement du tiroir 4, dans la bague 27, en direction du couvercle 26, est limité par un anneau métallique 36, fendu, engagé dans une gorge périphérique 37 du tiroir 4. Cet anneau 36 est susceptible de venir en appui contre la face 27a de la bague 27. Lorsqu'aucune action de freinage n'est exercée, le tiroir 4 occupe la position représentée sur les figures 2 et 3, pour laquelle l'anneau 36 est en appui contre le fond transversal de la chambre 28, le tiroir 4 étant poussé dans cette position par le ressort 25.

La figure 5 illustre une variante de réalisation dans laquelle la bague 27 est montée dans une pièce 40 en forme de chapeau dont la surface extérieure 40a du fond présente une forme convexe, notamment sphérique, par laquelle elle repose sur le couvercle 26. La coupelle 31 s'appuie contre la pièce 40.

La communication entre le conduit d'utilisation 18 et la chambre 22 se fait par un trou 41 réalisé dans le fond de la pièce 40.

Une telle disposition permet un appui ponctuel de la bague 27 et par suite évite la mise biais de cette bague et le grippage du tiroir 4.

Ceci étant, le fonctionnement de l'installation conforme à l'invention est le suivant.

En position repos, ou position d'absence de freinage, tous les éléments se trouvent dans la position représentée sur les figures 2 et 3.

Ainsi, le tiroir 3 est maintenu dans sa position de fermeture du conduit d'alimentation 9 (fig. 2) et d'ouverture du conduit d'échappement 12, par le ressort 13.

Le tiroir 4 est maintenu dans sa position de fermeture du conduit d'alimentation 19 (fig. 2) et d'ouverture du conduit d'échappement 20 (fig. 3) par le ressort 25.

La pression relative dans les chambres 14 et 22 est nulle.

La bague 27, sous l'action de la pression de suspension arrière $P_s$ (pression de la deuxième source) règnant dans la chambre 28 est en appui contre l'épaulement 26b du couvercle 26, ou contre le fond de la pièce 40 (fig. 5).

Lors d'un freinage, le fonctionnement est le suivant.

Lorsque le conducteur appuie sur la pédale de frein 6, cette dernière provoque le déplacement du tampon 5 à l'encontre du ressort 13; le tiroir 3 est entraîné dans ce déplacement et coulisse dans l'alésage 2a; de ce fait, le conduit d'échappement 12 est obturé tandis que la gorge annulaire 7 met en communication le conduit d'utilisation 8 avec le conduit d'alimentation 9.

La pression $P_{AV}$ qui s'établit dans le conduit d'utilisation 8 est transmise à la chambre 14, par les canaux 15 et 16 du tiroir 3. La force engendrée par la pression $P_{AV}$ sur le tiroir 4 provoque le déplacement de ce tiroir vers le couvercle 26, ce tiroir 4 coulissant dans la bague 27 qui reste immobile.

Le déplacement du tiroir 4 provoque l'obturation du conduit d'échappement 20 et la mise en communication du conduit d'utilisation 18 avec le conduit d'alimentation 19.

La pression $P_{AR}$ qui s'établit dans le conduit d'utilisation 18 est transmise à la chambre 22 par les canaux 24, 23 du tiroir 4 et les passages 34 de la bague 27, ou le trou 41 (fig. 5).

Pendant cette phase de fonctionnement, la pression du deuxième circuit $P_{AR}$ reste égale à la pression $P_{AV}$ du premier circuit. En effet, le tiroir 4, qui commande la pression $P_{AR}$ est soumis à ses deux extrémités opposées, qui ont une section égale, à l'action respectivement de la pression $P_{AV}$ et de la pression $P_{AR}$. Le tiroir 4 va donc prendre une position d'équilibre dynamique pour laquelle $P_{AV} = P_{AR}$, car l'effort du ressort 25 peut être négligé.

Si le conducteur continue à appuyer sur la pédale de frein, le tampon 5 et le tiroir 3 continuent à se déplacer vers le couvercle 26. Ce déplacement du tiroir 3 entraîne une augmentation de la section de passage offerte au fluide sous pression provenant de la conduite d'alimentation 9. La pression $P_{AV}$ dans le premier circuit va donc augmenter; la pression dans la conduite d'alimentation 9 et dans l'accumulateur principal 10 est désignée par HP, ce qui correspond à la valeur maximale possible pour la pression $P_{AV}$.

Par suite de l'augmentation de la pression $P_{AV}$ dans la chambre 14, le tiroir 4 continue à se déplacer dans la bague 27 vers le couvercle 26, de telle sorte que la pression $P_{AR}$ dans le second circuit augmente également afin que la relation $P_{AV} = P_{AR}$ reste satisfaite.

Le fluide dans la canalisation 19 et dans le cylindre 21 est à la pression $P_s$ de suspension arrière. Cette pression $P_s$ correspond à la valeur maximale que peut prendre la pression $P_{AR}$.

Le déplacement du tiroir 4, vers le couvercle 6, peut se poursuivre jusqu'à ce que l'anneau 36 vienne en appui contre la face 27a de la bague 27.

Cette bague 27 est soumise, sur ses faces 27a et 27b à deux forces opposées.

Si l'on désigne par S la section annulaire comprise entre le diamètre extérieur maximal de la bague 27 et la diamètre intérieur minimal de cette bague, la force dirigée vers le couvercle 26, exercée par la pression $P_s$ dans la chambre 28, sur la bague 27 est égale à:

$$F = P_s \times S .$$

L'autre extrémité de la bague 27 est soumise:

— d'une part à la force R du ressort 30, cette force étant dirigée vers le tiroir 3;

— d'autre part à la force produite par la pression $P_{AR}$ régnant dans la chambre 22, cette force est égale à: $P_{AR} \times S$.

La bague 27 reste en appui contre l'épaulement 26b, ou la pièce 40 (fig. 5), aussi longtemps que $F \geq R + (P_{AR} \times S)$.

Par contre, dès que F devient inférieure à $[R + (P_{AR} \times S)]$, la bague 27 coulisse dans l'alésage 2c en s'éloignant du couvercle 26.

Cela se produit pour une pression

$$P_{AR} > \frac{F-R}{S}$$

avec

$$F = P_s \times S,$$

d'où

$$P_{AR} > P_s - \frac{R}{S}$$

A partir de cette valeur de la pression $P_{AR}$, valeur qui dépend de la pression de suspension arrière $P_s$, c'est-à-dire de la charge du véhicule, un effet de compensation de la pression $P_{AR}$ est introduit.

En effet, l'anneau 36 du tiroir 4 va venir en appui contre la face 27a de la bague 27.

Le tiroir 4 va prendre une position d'équilibre déterminant une pression $P_{AR}$ telle que les forces qui agissent sur l'ensemble du tiroir 4 et de la bague 27 s'équilibrent.

Si l'on désigne par $s_1$ la section de l'alésage 2a et du tiroir 4, on peut écrire les relations suivantes.

La force totale s'exerçant sur le tiroir 4 et la bague 27, et dirigée vers le couvercle 26, est égale à $P_{AV} \times s_1$ (force exercée par la pression dans la chambre 14 sur le tiroir 4), augmentée de la force $P_s \times S$ (force sur la bague 27 exercée par la pression dans la chambre 28).

La force s'exerçant en sens contraire est égale à:

$$(P_{AR} \cdot s_1) + [R + (P_{AR} \times S)]$$

C'est-à-dire: force de la pression dans la chambre 22 sur le tiroir 4 augmentée de la force s'exerçant sur la bague 27.

Finalement, le tiroir 4 prend une position d'équilibre telle que:

$$(P_{AV} \cdot s_1) + (P_s \cdot S) = (P_{AR} \cdot s_1) + R + (P_{AR} \cdot S).$$

D'où l'expression de la pression $P_{AR}$ dans le deuxième circuit en fonction de la pression $P_{AV}$ dans le premier circuit:

$$P_{AR} = \left[ P_{AV} \cdot \frac{s_1}{s_1 + S} \right] + \left[ \frac{(P_s \cdot S) - R}{s_1 + S} \right]$$

Il est clair que la position d'équilibre du tiroir 4 est une position d'équilibre dynamique, c'est-à-dire que le tiroir 4 oscille autour de cette position de manière soit à obturer le conduit d'alimentation 29 et à relier le conduit d'utilisation 18 de l'échappement 20, si la pression $P_{AR}$ devient supérieure à la valeur correspondant à la relation précédente, soit à obturer le conduit d'échappement 20 et à relier le conduit d'utilisation 18 au conduit d'alimentation 29 si la pression $P_{AR}$ devient inférieure à la valeur déterminée par la relation précédente.

Lorsque le tiroir 3 continue à s'enfoncer dans l'alésage 2a, la pression $P_{AV}$ du premier circuit augmente, tandis que la pression $P_{AR}$ du deuxième circuit suit cette augmentation selon la loi correspondant à la relation précédente.

En se reportant à la figure 6, on peut voir le diagramme illustrant la variation de la pression $P_{AR}$ portée en ordonnées dans le deuxième circuit, en fonction de la pression $P_{AV}$ dans le premier circuit, portée en abscisses.

La valeur maximale de la pression $P_{AV}$ est HP, pressions dans l'accumulateur 10.

Deux courbes I et II ont été tracées correspondant, respectivement, à deux pressions différentes $P_{sI}$ et $P_{sII}$ dans l'accumulateur de suspension 21, c'est-à-dire correspondant à deux charges différentes du véhicule.

La courbe I correspond à une charge moindre; le point $A_I$, d'abscisse $P_{CI}$, à partir duquel la pression $P_{AR}$ est modulée, suivant un taux de variation moindre que celui de la pression du circuit AV, a une abscisse inférieure à celle $P_{CII}$ du point $A_{II}$ pour lequel la modulation intervient, à une charge supér-

5

ieure.

Jusqu'aux points $A_I$ ou $A_{II}$, la courbe représentative correspond à la première bissectrice puisque $P_{AR} = P_{AV}$.

Au-delà des points de compensation, les deux courbes sont parallèles mais décalées suivant l'axe des ordonnées; la pente de ces deux parties rectilignes est égale à

$$\frac{s_1}{s_1 + S}.$$

Le décalage $\Delta p$ entre l'ordonnée du point $A_I$ et la pression correspondante de suspension arrière $P_{SI}$ reste constant; ce décalage se retrouve donc entre le point $A_{II}$ et la pression $P_{sII}$.

En effet

$$\Delta p = P_{sI} - \left( P_{sI} - \frac{R}{S} \right) = \frac{R}{S}.$$

L'installation de commande de freinage de l'invention et l'ensemble ou dispositif de dosage, représentés sur les figures 2 et 3, conduisent à un freinage amélioré du fait de la modulation de la pression $P_{AR}$ du second circuit en fonction de la charge du véhicule. Ces améliorations sont obtenues avec un minimum de pièces supplémentaires et donc avec un prix de revient réduit.

## Revendications

1. Dispositif de dosage pour une installation de freinage pour véhicule comprenant deux circuits indépendants (AV, AR) et deux tiroirs coulissants (3, 4) de commande permettant l'alimentation en fluide sous pression de chaque circuit, un premier tiroir (3) étant sensible à un dispositif (5) actionné par le conducteur, ce premier tiroir (3) contrôlant la pression de fluide admis dans un premier circuit (AV) à partir d'une première source de fluide sous pression (10) notamment un accumulateur hydraulique, le second tiroir (4) étant soumis à une extrémité à la pression du fluide du premier circuit (AV) et, à son autre extrémité, à la pression du fluide du second circuit (AR), ce second tiroir (4) étant propre à contrôler la pression de fluide admis dans le deuxième circuit (AR) à partir d'une deuxième source de fluide sous pression (21) notamment un accumulateur de suspension, caractérisé par le fait que le second tiroir (4) est combiné avec des moyens de compensation (C) sensibles à la charge du véhicule, propres à exercer une force axiale sur ce second tiroir (4) dans le même sens que la force exercée par la pression du fluide du second circuit (AR) sur ce second tiroir (4), à partir d'une valeur limite de la pression ($P_{CI}$, $P_{CII}$) dans le second circuit (AR) et que le dispositif comporte des moyens (27, 27a 28, 31) propres à modifier la valeur limite de la pression ($P_{CI}$, $P_{CII}$) en fonction de la charge, l'ensemble permettant d'assurer une modulation de la pression ($P_{AR}$) du fluide dans le deuxième circuit selon un taux de variation inférieur à celui de la pression ($P_{AV}$) du premier circuit, lorsque la pression dans le premier circuit a atteint la susdite valeur limite ($P_{CI}$, $P_{CII}$) dépendant de la charge du véhicule.

2. Dispositif selon la revendication 1, caractérisé par le fait que les moyens de compensation (C) et les moyens pour modifier valeur limite ($P_{CI}$, $P_{CII}$) de la pression en fonction de la charge comprennent une bague (27) montée coulissante dans un alésage (2c), bague dans laquelle le second tiroir (4) est monté coulissant à son extrémité opposée à celle soumise à la pression ($P_{AV}$) du fluide du premier circuit, cette bague (27) étant soumise sur une face (27b) à la pression ($P_{AR}$) du fluide du second circuit et à l'action d'un ressort (30), cette face (27b) étant éloignée de l'extrémité du second tiroir (4) soumise à la pression ($P_{AV}$) du premier circuit, tandis que l'autre face (27a) de la bague est soumise à une force dépendant de la charge du véhicule.

3. Dispositif selon la revendication 2, pour installation de freinage dans laquelle la deuxième source de fluide sous pression est formée par un accumulateur de suspension, caractérisé par le fait que la face (27a) de la bague (27) tournée vers le premier tiroir (3) est soumise à la pression ($P_s$) du fluide de cet accumulateur (21) de suspension, cette pression dépendant de la charge du véhicule.

4. Dispositif selon la revendication 3, caractérisé par le fait que la face (27a) de la bague, tournée vers le premier tiroir, limite une chambre (28) dans laquelle est admise la pression ($P_S$) de la deuxième source (21), à partir du conduit d'alimentation (19), par un conduit (29).

5. Dispositif selon l'une quelconque des revendications 2 à 4, caractérisé par le fait que l'extrémité (27b) de la bague (27) éloignée du premier tiroir (3) présente de canaux ou rainures (34) qui permettent le maintien d'une communication entre le volume intérieur de la bague et une chambre (22), entourant la bague, lorsque l'extrémité (27b) de cette bague est en appui, notamment contre un épaulement (26b) d'un couvercle.

6. Dispositif selon l'une quelconque des revendications 2 à 4, caractérisé par le fait que la bague (27) est montée dans une pièce (40) en forme de chapeau dont la surface extérieure (40a) du fond présente une forme convexe, notamment sphérique, par laquelle elle repose sur le couvercle (26), ce fond étant notamment muni d'un trou (41) de communication.

7. Dispositif selon l'une quelconque des revendications 2 à 6, caractérisé par le fait que le ressort (30) agissant sur la bague (27) est disposé entre un couvercle (26) de fermeture et une coupelle (31) qui repose sur un anneau (32), ou une pièce (40), prenant appui contre la bague (27).

8. Dispositif selon l'une quelconque des revendications 3 à 7, caractérisé par le fait qu'un anneau (36) fendu est engagé dans une gorge périphérique (37) du tiroir (4) pour limiter le déplacement du tiroir (4) dans la bague (27).

9. Dispositif selon l'une quelconque des revendications précédentes, caractérisé par le fait que le second circuit (AR) est constitué par un circuit de freinage arrière et la deuxième source de fluide sous pression est formée par un accumulateur (21) de suspension arrière.

## Patentansprüche

1. Druckdosiereinrichtung für eine Fahrzeugbremsanlage mit zwei unabhängigen Kreisen (AV, AR) und zwei gleitbar angeordneten Steuerschiebern (3, 4) für die Einspeisung einer Druckflüssigkeit in die beiden Kreise, wobei der erste Schieber (3) auf eine von dem Fahrzeuglenker betätigbare Vorrichtung (5) anspricht und den Druck der dem ersten Kreis (AV) von einer ersten Druckflüssigkeitsquelle (10), insbesondere einem hydraulischen Speicher, zugeführten Druckflüssigkeit steuert und wobei der zweite Schieber (4), der an einem seiner Enden vom Flüssigkeitsdruck des ersten Kreises (AV) und an seinem anderen Ende vom Flüssigdruck des zweiten Kreises beaufschlagbar ist, zur Steuerung des Druckes der Flüssigkeit dient, die dem zweiten Kreis (AR) von einer zweiten Druckflüssigkeitsquelle (21), insbesondere einem der Aufhängung zugeordneten Speicher, zugeführt wird, dadurch gekennzeichnet, daß der zweite Schieber (4) mit auf die Belastung des Fahrzeuges ansprechenden Ausgleichsmitteln (C) kombiniert ist, durch welche von einem Grenzwert ($P_{CI}$, $P_{CII}$) des Flüssigkeitsdruckes in dem dem zweiten Kreis (AR) an den zweiten Schieber (4) eine axiale Kraft ausübbar ist, die in derselben Richtung wirkt wie die von dem Flüssigkeitsdruck des zweiten Kreises (AR) auf diesen zweiten Schieber (4) ausgeübte Kraft, und daß die Vorrichtung Mittel (27, 27a; 28, 31) zur Änderung des genannten Grenzwertes ($P_{CI}$, $P_{CII}$) des Flüssigkeitsdruckes in Abhängigkeit von der Belastung beinhaltet, derart, daß der Flüssigkeitsdruck ($P_{AR}$) in dem zweiten Kreis (AR) mit einer Variationsbreite moduliert wird, die kleiner ist als diejenige des Flüssigkeitsdruckes ($P_{AV}$) in dem ersten Kreis (AV), wenn der Flüssigkeitsdruck in dem ersten Kreis den genannten von der Belastung des Fahrzeuges abhängigen Grenzwert ($P_{CI}$, $P_{CII}$) erreicht hat.

2. Einrichtung nach Anspruch 1, dadurch gekennzeichnet, daß die Ausgleichsmittel (C) und die Mittel zur Änderung des Grenzwertes ($P_{CI}$, $P_{CII}$) des Flüssigkeitsdruckes in Abhängigkeit von der Belastung eine Hülse (27) umfassen, die gleitbar in einer Bohrung (2c) montiert ist und in der der zweite Schieber (4) an demjenigen seiner Endbereiche gleitbar geführt ist, der dem dem Flüssigkeitsdruck ($P_{AV}$) des ersten Kreises ausgesetzten Endbereich entgegengesetzt ist, und daß die Hülse (27) mit einer ihrer Stirnflächen (27b) dem Flüssigkeitsdruck ($P_{AR}$) des zweiten Kreises sowie der Wirkung einer Feder (30) ausgesetzt ist, wobei diese Stirnfläche (27b) von dem dem Flüssigkeitsdruck ($P_{AV}$) des ersten Kreises ausgesetzten Endbereich des zweiten Schiebers (4) abgewandt ist, während die andere Stirnfläche (27a) der Hülse einer von der Belastung des Fahrzeuges abhängigen Kraft ausgesetzt ist.

3. Einrichtung nach Anspruch 2 für eine Bremsanlage, in welcher die zweite Druckflüssigkeit von einem der Aufhängung zugeordneten Speicher gebildet ist, dadurch gekennzeichnet, daß die dem ersten Schieber (3) zugewandte Stirnfläche (27a) der Hülse (27) dem Flüssigkeitsdruck ($P_s$) des der Aufhängung zugeordneten Speichers (21) ausgesetzt ist, wobei dieser Druck von der Belastung des Fahrzeuges abhängt.

4. Einrichtung nach Anspruch 3, dadurch gekennzeichnet, daß die dem ersten Schieber (3) zugewandte Stirnfläche (27a) der Hülse (27) eine Kammer (28) begrenzt, welcher der Druck ($P_s$) der zweiten Quelle (21) von der entsprechenden Speiseleitung (19) aus über einen Kanal (29) zuführbar ist.

5. Einrichtung nach einem der Ansprüche 2 bis 4, dadurch gekennzeichnet, daß die dem ersten Schieber (3) abgewandte Stirnfläche (27b) der Hülse (27) Kanäle oder Nuten (34) aufweist, die die Aufrechterhaltung einer Verbindung zwischen dem inneren Volumen der Hülse und einer die Hülse umgebenden Kammer (22) ermöglichen, wenn die genannte Stirnfläche (27b) der Hülse (27) sich, insbeondere gegen eine Schulter (26b) eines Verschlußteiles (26), abstützt.

6. Einrichtung nach einem der Ansprüche 2 bis 4, dadurch gekennzeichnet, daß die Hülse (27) in einem becherförmigen Teil (40) montiert ist, dessen äußere Bodenfläche (40a) eine konvexe, insbesondere eine sphärische, Form besitzt, mit welcher sie sich auf dem Verschlußteil (26) abstützt, und daß der Boden des becherförmigen Teiles (40) mit einer Verbindungsöffnung (41) versehen ist.

7. Einrichtung nach einem der Ansprüche 2 bis 6, dadurch gekennzeichnet, daß die auf die Hülse (27) einwirkende Feder (30) zwischen einem Verschlußteil (26) und einem Becher (31) angeordnet ist, der auf einem Ring (32) oder einem Teil (40) ruht, welches sich gegen die Hülse (27) abstützt.

8. Einrichtung nach einem der Ansprüche 3 bis 7, dadurch gekennzeichnet, daß ein mit einem Schlitz versehener Ring (36) in einer peripheren Kehle (37) des Schiebers (4) gefaßt ist und daß dieser Ring den Verschiebungsweg des Schiebers (4) in der Hülse (27) begrenzt.

9. Einrichtung nach einem der vorhergehenden Ansprüche, dadurch gekennzeichnet, daß der zweite Kreis (28) von einem Bremskreis für die Hinterräder gebildet ist und daß die zweite Druckflüssigkeitsquelle von einem der hinteren Aufhängung zugeordneten Speicher (21) gebildet ist.

**Claims**

1. A pressure regulating system for a vehicle braking installation comprising two independent circuits (AV, AR) and two control slide valves (3, 4) enabling each circuit to be fed with pressure fluid, a first valve (3) being sensitive to a driver-actuated means (5), said first valve (3) controlling the fluid pressure admitted to a first circuit (AV) from a first pressure fluid source (10), more particularly a hydraulic accumulator, one end of the second valve (4) being subjected to the pressure of the fluid of the first circuit (AV) while its other end is subject to the pressure of the fluid of the second circuit (AR), said second valve (4) being adapted to control the fluid pressure admitted to the second circuit (AR) from a second pressure fluid source (21), more particularly a suspension accumulator, characterised in that the second valve (4) is combined with compensation means (C) sensitive to the vehicle load and adapted to exert an axial force on said second valve (4) in the same direction as the force exerted by the pressure of the fluid of the second circuit (AR) on said valve (4), from a pressure limit value ($P_{CI}$, $P_{CII}$) in the second circuit (AR) and the system comprises means (27, 27a; 28, 31) adapted to modify the limit value of the pressure ($P_{CI}$, $P_{CII}$) in dependence on the load, the arrangement allowing the pressure ($P_{AR}$) of the fluid in the second circuit to be modulated in accordance with a variation rate less than that of the pressure ($P_{AV}$) of the first circuit when the pressure in the first circuit has reached the said limit value ($P_{CI}$, $P_{CII}$) depending on the vehicle load.

2. A system according to claim 1, characterised in that the compensation means (C) and the means for modifying the pressure limit value ($P_{CI}$, $P_{CII}$) in dependence on the load comprise a ring (27) mounted slidably in a bore (2c), in which ring the second valve (4) is mounted slidably at its end remote from that subject to the pressure ($P_{AV}$) of the fluid of the first circuit, one surface (27b) of said ring (27) being subject to the pressure ($P_{AR}$) of the fluid of the second circuit and to the action of a spring (30), said surface (27b) being remote from the end of the second valve (4) subject to the pressure ($P_{AV}$) of the first circuit while the other surface (27a) of the ring is subject to a force depending upon the vehicle load.

3. A system according to claim 2, for a braking installation in which the second pressure fluid source is a suspension accumulator, characterised in that that surface (27a) of the ring (27) which faces the first valve (3) is subject to the pressure ($P_s$) of the fluid of said suspension accumulator (21), said pressure depending upon the vehicle load.

4. A system according to claim 3, characterised in that that surface (27a) of the ring which faces the first valve defines a chamber (28) to which the pressure ($P_S$) of the second source (21) is admitted from the supply conduit (19) via a conduit (29).

5. A system according to any one of claims 2 to 4, characterised in that that end (27b) of the ring (27) which is remote from the first valve (3) is formed with ducts or grooves (34) for maintaining communication between the inner volume of the ring and a chamber (22) surrounding the ring when the end (27b) of said ring bears more particularly against a shoulder (26b) of a cover.

6. A system according to any one of claims 2 to 4, characterised in that the ring (27) is mounted in a cap-shaped member (40), the outer end surface (40a) of which has a convex, more particularly spherical, shape, by which it rests on the cover (26), said end being more particularly formed with a communication hole (41).

7. A system according to any one of claims 2 to 6, characterised in that the spring (30) acting on the ring (27) is disposed between a closure cover (26) and a dome (31) resting on a ring (32) or a member (40) bearing against the ring (27).

8. A system according to any one of claims 3 to 7, characterised in that a split ring (36) is engaged in a peripheral groove (37) of the valve (4) to limit the movement of the valve (4) in the ring (27).

9. A system according to any one of the preceding claims, characterised in that the second circuit (AR) is a rear braking circuit and the second pressure fluid source is a rear suspension accumulator (21).

0 041 020

Fig.1.

Fig.6.

9

# Fig.2.

# Fig.3.

# Fig4.

# Fig.5.